Europäisches Patentamt

European Patent Office

Office européen des brevets

(19)

(11) Numéro de publication: **0 128 053**
**B1**

(12) **FASCICULE DE BREVET EUROPEEN**

(45) Date de publication du fascicule du brevet:
**30.03.88**

(21) Numéro de dépôt: **84400684.1**

(22) Date de dépôt: **06.04.84**

(51) Int. Cl.⁴: **G 01 C 9/12, H 01 Q 1/12**

(54) **Outil de mesure de l'angle de site d'une antenne volumique.**

(30) Priorité: **12.04.83 FR 8305941**

(43) Date de publication de la demande:
**12.12.84 Bulletin 84/50**

(45) Mention de la délivrance du brevet:
**30.03.88 Bulletin 88/13**

(84) Etats contractants désignés:
**DE GB**

(56) Documents cités:
**EP - A - 0 026 001**
**CH - A - 192 615**
**GB - A - 132 637**
**US - A - 2 183 902**

**PATENTS ABSTRACTS OF JAPAN, vol. 6, no. 151**
**(E-124)[1029], 11 août 1982**

(73) Titulaire: **SOCIETE ELECTRONIQUE DE LA REGION PAYS DE LOIRE, 74, rue du Surmelin, F-75020 Paris (FR)**

(72) Inventeur: **Repussard, Jean-Yves, THOMSON-CSF SCPI 173, bld Haussmann, F-75379 Paris Cedex 08 (FR)**

(74) Mandataire: **Grynwald, Albert et al, THOMSON-CSF SCPI 19, avenue de Messine, F-75008 Paris (FR)**

**Description**

La présente invention concerne un outil de mesure de l'angle de site d'une antenne volumique notamment pour ondes hertziennes.

La présente invention trouve application dans le domaine du matériel grand public de réception d'émissions de télévision par satellite géostationnaire. De telles émissions émises ou réémises par le moyen d'un satellite géostationnaire doivent être captées par des antennes volumiques généralement de forme parabolique. Le pointage de l'antenne sur le satellite doit être réalisé avec une précision en site et en azimut de l'ordre du degré d'arc. On pourrait par exemple utiliser un inclinomètre fixé sur une antenne comme dans le document JP-A-5 773 502 ou un dispositif comme dans EP-A-026 001 où on décrit une solution à ce problème pour une antenne assez lourde, dans laquelle des moyens de mesure sont prévus en permanence; ceux-ci comportent en fait des pendules pesants dont la position d'équilibre indique sur des graduations la position angulaire de l'axe électrique de l'antenne. Selon cette technique, le repérage est dévolu à un organe de l'antenne de réception, ce qui augmente son coût. Pour permettre une grande diffusion de ce matériel, il est nécessaire d'utiliser des constituants peu coûteux et d'une utilisation simple. Un inclinomètre classique avec bille est connu de GB-A-132 637.

La présente invention propose un outil de mesure de l'angle de site d'une antenne volumique pour ondes hertziennes du type comportant un pendule pesant monté sur l'antenne qui coopère avec un moyen de repérage de la position stable du pendule pour permettre de mesurer l'angle de site de l'antenne, le pendule étant constitué par une bille qui roule sur une partie concave de l'antenne, le moyen de repérage comportant une série de graduations gravées dans la partie concave de l'antenne.

La présente invention propose un outil de mesure de l'angle de site d'une antenne volumique pour ondes hertziennes du type comportant un pendule pesant monté sur l'antenne qui coopère avec un moyen de repérage de la position stable du pendule pour permettre de mesurer l'angle de site de l'antenne, l'outil comportant un support destiné à reposer sur l'antenne volumique, le pendule étant constitué par une masse oscillante autour d'un axe solidaire du support et le moyen de repérage comportant un rapporteur d'angle et un indicateur de la position du pendule comme une aiguille, portée par la masse.

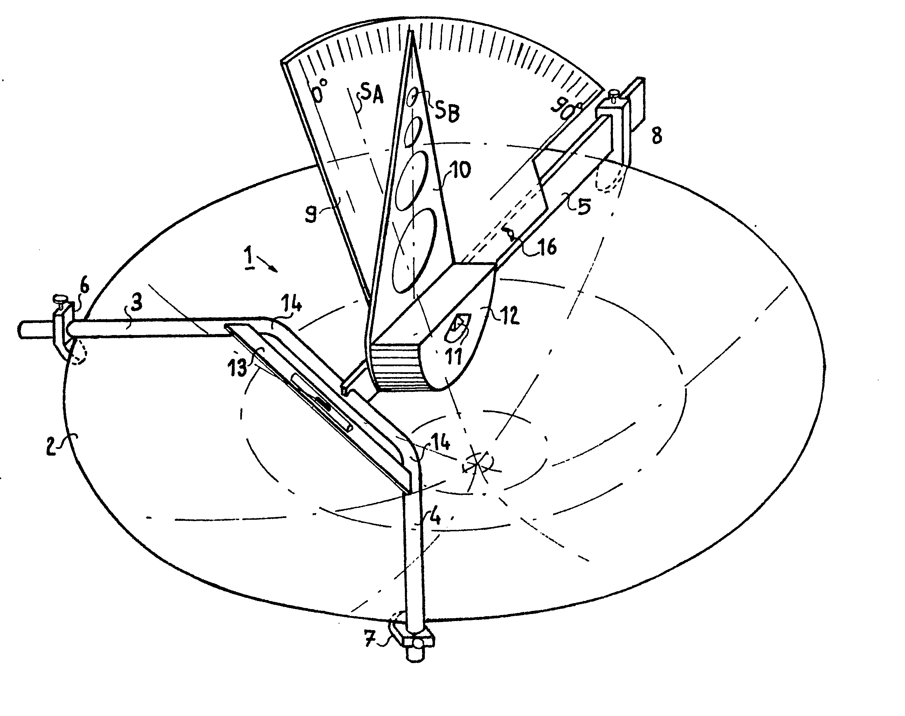

La présente invention sera mieux comprise à l'aide de la description et de la figure unique annexée.

L'idée de base de l'invention est de mesurer l'angle de site dans le plan azimutal qui contient la verticale du lieu en mesurant la position stable d'un pendule pesant mis en mouvement dans ce plan azimutal. Deux modes principaux de réalisation sont proposés ci-après.

Dans un premier mode de réalisation, l'outil de mesure de l'angle de site de l'antenne volumique comporte un pendule pesant constitué par une simple bille destinée à rouler sur une partie concave de l'antenne volumique. L'antenne comporte une série de graduations, qui permettent de lire directement la valeur de l'angle de site quand la bille prend sa position stable. Les graduations dans le cas d'une antenne de révolution, sont constituées par exemple par des cercles tracés à l'intérieur du volume de l'antenne avec des repères en degré d'arc. On peut ainsi obtenir une très bonne précision inférieure au degré d'arc dans la mesure de l'angle de site. La rusticité des moyens utilisés peut être une contrepartie avantageuse à l'obligation de graver ou d'imprimer à la fabrication des graduations dont la précision détermine la précision de l'outil de mesure.

Pour remédier à cet inconvénient, la présente invention propose un deuxième mode de réalisation représenté à la figure unique. L'outil 1 est monté sur l'antenne volumique 2. L'outil 1 comporte d'une part un support 3–5 et d'autre part un pendule pesant 10–12. Le pendule pesant est fixé au support. Dans une variante particulièrement adaptée aux antennes de révolution, le support est sensiblement réalisé dans un plan géométrique unique: le plan des bords de l'antenne 3–5. Il comporte trois bras, par exemple à 120° l'un de l'autre. Chaque bras porte un moyen de fixation à l'antenne. Ce moyen de fixation dans une première variante est constitué par un crochet 6–8 qui coulisse le long du bras qui le porte. Le crochet 6 peut être muni d'un moyen de blocage comme une vis de pression qui fixe sa position sur le bras. Dans une seconde variante, le crochet est fixé à l'extrémité du bras qui comporte une partie télescopique qu'il est possible par des moyens de blocage bien connus de fixer. De telles dispositions permettent l'adaptation de l'outil selon l'invention à des antennes d'ouvertures variées.

Sur l'un des bras 5 de l'outil, est monté un rapporteur d'angle 9. Un axe 11 est monté sur le bras 5 passant par le centre de mesure des angles du rapporteur. Sur cet axe 11 est montée une masse 12 porteuse d'une aiguille 10 dont l'axe SB permet de mesurer l'angle de site. La graduation 0° reste en permanence parallèle à l'axe SA de l'antenne 2. La lecture de la position de l'aiguille 10 sur le rapporteur permet donc une lecture directe de l'angle de site.

Afin de garantir un étalonnage de l'outil, dans une variante de réalisation il est proposé de monter la tôle 9 du rapporteur d'angle pivotante autour de l'axe 11 grâce à une lumière 16 percée sur la tôle 9 près du bras 5. Le bras 5 porte alors un ensemble vis-écrou qui passe à travers la lumière 16 permettant le blocage de la position du rapporteur. Pour permettre l'étalonnage de l'outil, il est aussi prévu un niveau à bulle 13 monté de telle manière sur les bras 3 et 4 qu'il demeure le long d'une droite parallèle à l'axe 11 et perpendiculaire à l'axe SA de l'antenne 2. D'autres configurations peuvent être envisagées.

Pour permettre l'étalonnage, on place l'antenne au site 0°. Le plan de sortie de l'antenne est alors horizontal. L'axe 0°, l'axe SA et l'axe SB doivent coïncider avec la verticale du lieu. On peut alors régler l'axe 0° par le moyen de la lumière 16 pour obtenir un étalonnage convenable. L'obtention d'un plan de sortie d'antenne horizontale est obtenue quand simultanément le niveau à bulle est stabilisé et l'axe SB est aligné avec l'axe 0° du rapporteur 9.

## Revendications

1. Outil (1) de mesure de l'angle de site d'une antenne volumique pour ondes hertziennes, du type comportant un pendule pesant monté sur l'antenne (2) et un moyen de repérage de la position stable du pendule pour permettre de mesurer l'angle de site de l'antenne (2), caractérisé en ce que le pendule est constitué par une bille qui roule sur une partie concave de l'antenne (2) et que le moyen de repérage comporte une série de graduations gravée dans la partie concave de l'antenne.

2. Outil (1) de mesure de l'angle de site d'une antenne volumique pour ondes hertziennes, du type comportant un pendule pesant monté sur l'antenne (2) et un moyen de repérage de la position stable du pendule pour permettre de mesurer l'angle de site de l'antenne (2), caractérisé en ce qu'il comporte un support (3–5) destiné à reposer sur l'antenne (2) volumique, le pendule étant constitué par une masse (12) oscillante autour d'un axe (11) solidaire du support, le moyen de repérage comportant un rapporteur d'angle (9) et un indicateur de la position du pendule comme une aiguille (10), portée par la masse (12).

3. Outil selon la revendication 2, caractérisé en ce que le support comprend au moins trois pieds (3–5) allongés destinés à prendre appui sur les bords de l'antenne.

4. Outil selon la revendication 3, caractérisé en ce que chaque bras comporte un moyen de fixation au bord de l'antenne.

5. Outil selon la revendication 4, caractérisé en ce que chaque moyen de fixation est constitué par un crochet (6–8) qui coulisse le long du bras et qui est bloquable par un moyen de blocage comme une vis de pression sur le pied en position.

6. Outil selon la revendication 4, caractérisé en ce qu'un crochet est monté à l'extrémité de chaque bras, le bras comportant une coulisse de longueur réglable.

7. Outil selon la revendication 2, caractérisé en ce qu'il comporte un niveau à bulle (13) fixé au support (3–5) le long d'une droite parallèle à l'axe (11) et perpendiculaire à l'axe (SA) de l'antenne (2).

8. Outil selon la revendication 7, caractérisé en ce que le niveau à bulle (13) est fixé à deux des bras (3, 4) de manière à être monté le long d'une perpendiculaire au troisième bras (5) porteur du rapporteur d'angle (9).

9. Outil selon la revendication 2, caractérisé en ce que le rapporteur d'angle (9) est constitué par une tôle plane, le centre de la graduation en arc passant par l'axe (11) de rotation de la masse (12), le rapporteur pouvant tourner autour de cet axe (11) pour permettre son étalonnage, la position fixe étant obtenue par serrage d'un ensemble vis-écrou (16) porté par le bras (5), la tôle (9) comportant une lumière pour permettre son glissement sur la vis (16).

## Claims

1. Tool (1) for the measurement of the elevation angle of a volume antenna for Hertzian waves, of the type comprising a pendulum weight mounted on the antenna (2) and read off means for the stable position of the pendulum to permit the measurement of the angle of elevation of the antenna (2), characterized in that the pendulum is formed by a ball rolling on a concave portion of the antenna (2) and in that the read off means comprises a series of graduations engraved into the concave portion of the antenna.

2. Tool (1) for the measurement of the elevation angle of a volume antenna for Hertzian waves, of the type comprising a pendulum weight mounted on the antenna (2) and read off means for the stable position of the pendulum to permit the measurement of the angle of elevation of the antenna (2), characterized in that it comprises a support (3–5) to be carried by the volume antenna (2), the pendulum being formed by a mass (12) oscillating about an axis (11) fixed with the support, the read off means comprising a goniometer (9) and a pendulum position indicator such as a needle (10) carried by the mass (12).

3. Tool according to claim 2, characterized in that the support comprises at least three elongated legs (3–5) intended to bear on the edges of the antenna.

4. Tool according to claim 3, characterized in that each leg comprises means for affixing to the edge of the antenna.

5. Tool according to claim 4, characterized in that each affixing means is formed by a hook (6–8) which slides along the leg and is adapted to be blocked by blocking means such as a pressure screw on the leg when it is in position.

6. Tool according to claim 4, characterized in that a hook is mounted at the end of each leg, the leg comprising a slide track of adjustable length.

7. Tool according to claim 2, characterized in that it comprises a water level (13) affixed to the support (3–5) along a straight line parallel to the axis (11) and perpendicular to the axis (SA) of the antenna (2).

8. Tool according to claim 7, characterized in that the water level (13) is fixed to two legs (3, 4) in a manner to be mounted along a perpendicular to the third leg (5) carrying the goniometer (9).

9. Tool according to claim 2, characterized in that the goniometer (9) is formed by a plane sheet, the center of the arc-shaped graduation passing through the axis (11) of rotation of the mass (12), the goniometer being rotatable about this axis (11) to permit its calibration, the fixed position being obtained by tightening a screw-nut unit (16) carried by the leg (5), the sheet (9) having an opening to permit its sliding movement on the screw (16).

**Patentansprüche**

1. Werkzeug (1) zur Messung des Höhenwinkels bei einer Volumenantenne für Hertzsche Wellen, vom Typ mit einem an der Antenne (2) gelagerten Pendelgewicht und einer Ableseeinrichtung zum Erkennen der stabilen Lage des Pendels, um die Höhenwinkelmessung der Antenne (2) zu gestatten, dadurch gekennzeichnet, dass das Pendel durch eine Kugel gebildet ist, die auf einer konkaven Fläche der Antenne (2) rollt, und dass die Ableseeinrichtung eine Reihe von Gradeinteilungen umfasst, die in den konkaven Teil der Antenne eingraviert sind.

2. Werkzeug (1) zur Messung des Höhenwinkels bei einer Volumenantenne für Hertzsche Wellen, vom Typ mit einem an der Antenne (2) gelagerten Pendelgewicht und einer Ableseeinrichtung zum Erkennen der stabilen Lage des Pendels, um die Messung des Höhenwinkels der Antenne (2) zu gestatten, dadurch gekennzeichnet, dass es einen Träger (3–5) umfasst, welcher dazu bestimmt ist, auf der Volumenantenne (2) zu ruhen, wobei das Pendel durch eine Masse (12) gebildet ist, die um eine mit dem Träger fest verbundene Achse (11) schwingt, wobei die Ableseeinrichtung einen Winkelmesser (9) und einen Zeiger für die Stellung des Pendels wie eine von der Masse (12) getragene Nadel (10) umfasst.

3. Werkzeug nach Anspruch 2, dadurch gekennzeichnet, dass der Träger wenigstens drei Füsse (3–5) umfasst, die gestreckt ausgebildet und dazu bestimmt sind, sich auf den Rändern der Antenne abzustützen.

4. Werkzeug nach Anspruch 3, dadurch gekennzeichnet, dass jeder Arm eine Einrichtung zur Befestigung am Rand der Antenne umfasst.

5. Werkzeug nach Anspruch 4, dadurch gekennzeichnet, dass jede Befestigungseinrichtung durch einen Haken (6–8) gebildet ist, welcher entlang dem Arm verschiebbar ist und durch eine Blockiereinrichtung wie eine Druckschraube an dem in Stellung gebrachten Fuss arretiert werden kann.

6. Werkzeug nach Anspruch 4, dadurch gekennzeichnet, dass ein Haken am Ende jedes Armes angebracht ist, wobei der Arm eine Schiebeführung mit einstellbarer Länge umfasst.

7. Werkzeug nach Anspruch 2, dadurch gekennzeichnet, dass es eine Wasserwaage (13) aufweist, die am Träger (3–5) entlang einer Geraden befestigt ist, die parallel zur Achse (11) und senkrecht zur Achse (SA) der Antenne (2) ist.

8. Werkzeug nach Anspruch 7, dadurch gekennzeichnet, dass die Wasserwaage (13) an zwei Armen (3, 4) so befestigt ist, dass sie längs einer Senkrechten zu dem dritten Arm (5) angebracht ist, welcher den Winkelmesser (9) trägt.

9. Werkzeug nach Anspruch 2, dadurch gekennzeichnet, dass der Winkelmesser (9) durch ein ebenes Blech gebildet ist, wobei die Mitte der bogenförmigen Gradeinteilung durch die Umdrehungsachse (11) der Masse (12) verläuft, und wobei der Winkelmesser um diese Achse (11) verdrehbar ist, um seine Eichung zu ermöglichen, wobei die feste Lage dadurch erhalten wird, dass eine Schrauben/Schraubmutter-Einheit (16) angespannt wird, welche der Arm (5) trägt, und wobei das Blech (9) eine Öffnung aufweist, die ihm das Gleiten auf der Schraube (16) ermöglicht.